Europäisches Patentamt

European Patent Office

Office européen des brevets

(19)

(11) Veröffentlichungsnummer: **0 159 547**
**B1**

(12) # EUROPÄISCHE PATENTSCHRIFT

(45) Veröffentlichungstag der Patentschrift:
04.11.87

(21) Anmeldenummer: **85103353.0**

(22) Anmeldetag: **22.03.85**

(51) Int. Cl.⁴: **B 01 F 7/10,** C 12 G 1/02

(54) Stehender Tank zur Behandlung von flüssigen Nahrungsmitteln mit Feststoffbestandteilen.

(30) Priorität: **22.03.84 DE 3410459**

(43) Veröffentlichungstag der Anmeldung:
**30.10.85 Patentblatt 85/44**

(45) Bekanntmachung des Hinweises auf die Patenterteilung:
**04.11.87 Patentblatt 87/45**

(84) Benannte Vertragsstaaten:
**AT BE CH DE FR GB IT LI NL**

(56) Entgegenhaltungen:
**FR-A-831 877**
**FR-A-2 402 470**
**FR-A-2 512 056**
**GB-A-149 136**

(73) Patentinhaber: **Rieger, Herbert, Talstrasse 33,
D-7121 Ingersheim (DE)**

(72) Erfinder: **Rieger, Herbert, Talstrasse 33, D-7121
Ingersheim (DE)**

(74) Vertreter: **Witte, Alexander, Dr.,
Schickhardtstrasse 24, D-7000 Stuttgart 1 (DE)**

## Beschreibung

Die Erfindung betrifft einen stehenden Tank zur Behandlung von flüssigen Nahrungsmitteln mit Feststoffbestandteilen, insbesondere Rotweinmaische, mit einem im wesentlichen zylindrischen Teil mit einer Hochachse, und mit einem im Tank angeordneten Rührwerk, das um eine oder mehrere, mindestens näherungsweise horizontal verlaufede Achsen im Tank drehbar ist und mit seinen Rührelementen einen Raumbereich mit kugelförmigem Umriß überstreicht.

Aus der BE-A-870 109 ist ein stehender Tank für die Nahrungsmittelindustrie bekannt, der aus einem stehenden zylindrischen Abschnitt mit unten angesetztem halbkugelförmigem Boden besteht. Im Bereich des Überganges zwischen dem stehenden zylindrischen Abschnitt und dem halbkugelförmigen Boden durchsetzt eine horizontale Welle den Tank, die ein Rührwerk trägt. Das Rührwerk besteht zu beiden Seiten der Welle aus einem sehr flachen und schmalen halben Kegelstumpfmantel, wobei diese Kegelstumpfmäntel auf beiden Seiten der Welle jeweils entgegengesetzt angestellt sind. An dem von der Welle am meisten beabstandeten Punkt ist der Kegelstumpfmantel durch einen entlang einer Sehne eingesetzten Kreisabschnitt verbreitert. Obwohl dieses Rührwerk somit einen Raumbereich mit kugelförmigem Umriß überstreicht, erfaßt es doch nur innerhalb dieses Raumbereiches ein etwa kugelschalenförmiges Volumen, während der weitaus überwiegende Teil des vom kugelförmigen Umriß umgebenen Raumbereiches unbeeinflußt bleibt, weil das Rührwerk innerhalb der Kegelstumpfmäntel und der Kreisabschnitte ein sehr großes "Fenster" freiläßt.

Der bekannte stehende Tank mit Rührwerk hat demnach zwei wesentliche Nachteile:

Zum einen kann ein effektives Durchrühren der flüssigen Nahrungsmittel mit Feststoffbestandteilen nur dann bewirkt werden, wenn sich das Rührwerk mit entsprechend hoher Drehzahl dreht, weil nur dann eine Durchwirbelung der Flüssigkeit mit den Feststoffbestandteilen erreicht wird. Dies ist für empfindliche Nahrungsmittel, beispielsweise für Rotweinmaische, jedoch nicht akzeptabel, weil bei zu hoher Verwirbelung beim Durchrühren unerwünschte Bitter- und Trubstoffe freigesetzt werden, die die Qualität des Weines drastisch herabsetzen.

Ein weiterer Nachteil des bekannten Tanks mit Rührwerk ist, daß der Boden infolge seiner halbkugelförmigen Gestalt nur sehr schwer bzw. sehr aufwendig herstellbar ist, dies gilt insbesondere deswegen, weil Tanks der in der vorliegenden Erfindung interessierenden Art einen Rührwerksdurchmesser von einem oder mehreren Metern aufweisen und daher halbkugelförmige Tankböden nur mit außerordentlich großen Schwierigkeiten hergestellt werden können. Bekanntlich verwendet man zum Abschluß von großen zylindrischen Tanks sogenannte "Klöpperböden", die jedoch bei einem Rührwerk mit kugelförmigem Raumbereich nicht eingesetzt werden können, weil ein Klöpperboden keine befriedigende Annäherung an das an sich gewünschte Kugelvolumen darstellt, so daß bei Verwendung eines Klöpperbodens große ungerührte Raumbereiche frei blieben.

Es ist weiter aus der DE-A-31 02 134 ein liegender zylindrischer Tank für die Behandlung von Rotweinmaische bekannt, den eine horizontale Welle durchsetzt, an der ein Rührflügel angeordnet ist, der als Wendeeinrichtung das gesamte Innenvolumen des Tanks überstreicht, wenn das Rührwerk sich dreht.

Dieser bekannte Tank hat jedoch den Nachteil, daß er statisch wesentlich schlechter beherrschbar ist als ein stehender Tank.

Der Erfindung liegt daher die Aufgabe zugrunde, einen Tank der eingangs genannten Art dahingehend weiterzubilden, daß er für Nahrungsmittel verwendbar ist, die sehr behutsam durchgerührt werden müssen, wie dies beispielsweise bei Rotweinmaische der Fall ist.

Diese Aufgabe wird erfindungsgemäß dadurch gelöst, daß die Rührelemente als im wesentlichen kreisförmige oder halbkreisförmige, das gesamte Volumen des Raumbereiches erfassende Wendescheiben ausgebildet und für die Feststoffbestandteile undurchlässig sind.

Der erfindungsgemäße Tank läßt sich somit mit besonderem Vorteil in der Kellereitechnik bei der Rotweinherstellung einsetzen, wenn der Rotwein nach dem Verfahren der sogenannten "Maischegärung" hergestellt wird. Bei diesem Verfahren wird die Rotweinmaische in den Tank eingefüllt und während des Gärens im Tank intervallweise behutsam durchgerührt, um die roten Farbstoffe aus den Traubenschalen herauszuwaschen. Das Durchrühren muß dabei besonders behutsam erfolgen, weil bei einem zu kräftigen Durchrühren die Traubenhäute zerschlagen würden, so daß Trubstoffe freigesetzt werden. Auch wurden bei zu kräftigem Durchrühren Bitterstoffe aus den Stengeln und Kernen freigesetzt, die gleichfalls die Weinqualität beeinflussen.

Es versteht sich jedoch, daß der erfindungsgemäße Tank keinesfalls nur bei der Rotweinherstellung einsetzbar ist, es sind vielmehr zahlreiche weitere Anwendungsgebiete denkbar, beispielsweise die Herstellung von Auszügen aus pflanzlichen oder tierischen Ausgangsprodukten. So können mit dem erfindungsgemäßen Tank beispielsweise Fruchtsäfte, Tees, Kräuterauszüge u. dgl. hergestellt werden, aber auch Gelatine und sonstige Produkte auf der Grundlage von tierischen Ausgangsmaterialien.

Der Einfachheit halber orientiert sich jedoch die folgende Beschreibung an der Anwendung bei der Rotweinherstellung, ohne die Erfindung jedoch auf dieses Anwendungsgebiet zu beschränken.

In weiterer Ausbildung der Erfindung weist der Tank einen zylindrischen Teil auf, der an der Oberseite mit einem gewölbten Dom und an der Unterseite mit einem konischen Teil abgeschlossen ist.

Diese Maßnahme hat den Vorteil, daß bei einfacher Konstruktion eine weitgehende Anpassung an ein kugelförmiges Tankvolumen erzielt werden kann, wobei jedoch gleichzeitig an der Oberseite genügend Gärraum für die Maische und an der Unterseite genügend Raum für eine Auslass-, Abtropf und/oder Austrageinrichtung verbleibt.

Dies gilt insbesondere dann, wenn nach einer Weiterbildung der Erfindung an die Unterseite des konischen Teiles ein zylindrischer Abschnitt angesetzt ist, der im unteren Bereich von ebenen Schrägflächen begrenzt ist, zwischen denen eine Austragschnecke angeordnet ist.

Diese Maßnahmen haben den Vorteil, daß im untered Bereich praktisch das gesamte Tankvolumen von den Rührelementen überstrichen wird, die bis in den Raum des zylindrischen Abschnittes hineinreichen und daß für die Austragschnecke gerade so viel Raum verbleibt, wie für ein Nachrutschen der Bruchstücke des Tresterkuchens bei nahezu vollständig abgelassenem Tank erforderlich ist.

Alternativ dazu kann in einer weiteren Ausgestaltung der Erfindung auch vorgesehen sein, daß eine der Schrägflächen direkt und die andere unter Abknickung in einen schräg zur Hochachse angeordneten Rohrstutzen übergehen.

Diese Maßnahme ist von besonderem Vorteil für kleine und einfachere Tanks, bei denen auf ein spezielles Austragwerk in Gestalt einer Schnecke verzichtet wird und der Tankinhalt durch den schräg angeordneten Rohrstutzen nach außen rutscht.

Weitere Ausführungsbeispiele der Erfindung zeichnen sich dadurch aus, daß die Unterseite des konischen Teiles in einen schräg angesetzten Rohrstutzen oder einen zentrischen Rohrstutzen übergeht.

Diese beiden Ausführungsbeispiele haben den Vorteil, daß die Tankkonfiguration besonders einfach ist und daher die Herstellung wenig Aufwand verursacht. Ausführungsbeispiele mit einem zentrischen, nach unten weisenden Rohrstutzen haben sich darüber hinaus vor allem in den Füllen bewährt, in denen der Tankinhalt nicht unter Schwerkrafteinfluß in andere Behälter abgelassen wird, sondern bei denen durch einen unten an den zentrischen Rohrstutzen angeflanschten Schlauch der Tankinhalt leergepumpt wird.

Bei einem weiteren Ausführungsbeispiel weist der Tank einen zylindrischen Teil auf, dessen Unterseite von einer schrägen, ebenen Bodenfläche begrenzt ist.

Diese Maßnahme eignet sich insbesondere für kleine Tanks, deren begrenztes Füllvolumen keine großen statischen Probleme aufwirft. Die Herstellung auch dieser Tanks ist besonders einfach, weil lediglich ein zylindrischer Körper mit einer ebenen Bodenfläche versehen werden muß, deren Schräge ausreicht, um ein selbsttätiges Entleeren des Tanks am tiefsten Punkt verwirklichen zu können.

Bei einer Variante hierzu wird der zylindrische Teil an seiner Unterseite von einer schrägen, gewölbten Bodenfläche begrenzt.

Diese Maßnahme hat den Vorteil, daß sie statisch günstiger ist als die Ausführungsform mit ebener Bodenfläche, außerdem kann die gewölbte Bodenfläche besser dem ein kugelförmiges Volumen überstreichenden Rührwerk angepaßt werden, so daß geringere, nicht vom Rührwerk erfaßte Volumina im Tank verbleiben.

Dies gilt insbesondere dann, wenn die Bodenfläche zylindermantelförmig ist, wobei die Zylinderachse den Mittelpunkt des Rührwerks schneidet.

In diesem Falle umgibt die schräge, gewölbte Bodenfläche nämlich das gerührte kugelförmige Volumen nach Art einer tangentialen Hüllfläche, so daß die Tankform besonders gut an eine Kugelgestalt angenähert ist.

Die beiden vorstehend geschilderten Ausführungsformen mit schräger, ebener bzw. gewölbter Bodenfläche haben darüber hinaus noch den gemeinsamen Vorteil, daß sich im vorderen unteren Raumbereich der Schrägfläche zwar ein vom Rührwerk nicht erfaßtes Restvolumen einstellt, dies ist jedoch in manchen Fällen durchaus erwünscht, weil sich in diesem Volumen die Traubenkerne ansammeln können, die schwerer sind als der Traubensaft. Man ist nämlich aus Qualitätsgründen bemüht, die Traubenkerne, die unerwünschte Geschmacksstoffe enthalten, nicht ständig zu rühren.

Weiterhin können die beiden vorstehend genannten Varianten so beschaffen sein, daß unterhalb der Bodenfläche eine Saftkammer angeordnet ist, die mit dem Inneren des Tanks über ein Ablaßventil verbindbar ist.

Diese Maßnahme hat den Vorteil, daß der zur Verfügung stehende Raum in der Kelter optimal ausgenutzt wird, weil ein derartiger Tank ohnehin auf einem Sockel oder einem durch Beine gebildeten Stativ stehen muß und auf die genannte Weise der ansonsten verlorene Raum unterhalb des Tanks zusätzlich als Saftkammer genutzt wird.

Gemäß einem besonders bevorzugten Ausführungsbeispiel sind die Rührelemente als kreisförmige oder halbkreisförmige Wendescheibe ausgebildet.

Diese Ausführungsform hat den Vorteil eines besonders einfachen mechanischen Aufbaus bei gleichzeitig vollständigem Überstreichen des kugelförmigen Volumens. Bei Verwendung einer kreisförmigen Wendescheibe ergibt sich zudem der Vorteil, daß die Achse durch den Schwerpunkt verläuft und dadurch der Antrieb der Wendescheibe kontinuierlich ist und keinen Wechselbeanspruchungen ausgesetzt ist. Eine halbkreisförmige Wendescheibe hat demgegenüber den Vorteil, daß - wie weiter unten noch erläutert werden wird - auch komplexe Anordnungen mit mehreren übereinander angeordneten Wendescheiben realisiert werden können, deren Bewegungsbahnen sich überschneiden, ohne daß es zu Kollisionen der Wendescheiben kommt. Auch kann es bei kleineren Tanks von Vorteil sein, zur Erzielung einer schonenden Durchmischung lediglich mit einer halbkreisförmigen Wendescheibe zu rühren.

Besonders bevorzugt ist weiterhin eine Ausführungsform der Erfindung, bei der die Wendescheibe mittels Blechen als flacher Rohlkörper ausgebildet ist.

Diese Maßnahme hat den Vorteil, daß bei geringen Herstellungskosten das Gewicht der Wendescheibe gering gehalten wird, andererseits sind durch entsprechende Blechzuschnitte sehr unterschiedliche Formgestaltungen der Wendescheibe erzielbar.

Bei einem weiteren, besonders bevorzugten Ausführungsbeispiel der Erfindung sind die Wendescheiben mit vorzugsweise herausnehmbaren Siebeinsätzen versehen.

Diese Maßnahme hat den Vorteil, daß der Saftanteil in der Maische die festen Bestandteile optimal durchfluten kann, weil die festen Bestandteile, insbesondere die Traubenhäute von den Siebeinsätzen festgehalten werden, während der Traubensaft durch die Siebeinsätze hindurch an den Schalen vorbeifließen und dabei die Farbstoffe besonders effektiv herauslösen kann, die sich bei Rotweintrauben bekanntlich fast ausschließlich in den Traubenhäuten befinden.

Bei derartigen Wendescheiben ist eine Ausführungsform bevorzugt, bei der ein nahezu die ganze Oberfläche der Wendescheibe einnehmender Siebeinsatz vorgesehen ist.

Diese Maßnahme hat den Vorteil, daß die von der Wendescheibe festgehaltenen festen Maischebestandteile über das gesamte Kugelvolumen hinweg vollkommen vom Traubensaft umströmt werden und damit eine besonders hohe Farbstoffauslaugung eintritt.

Das zuletzt genannte Ausführungsbeispiel kann erfindungsgemäß auch dazu verwendet werden, um im unteren Bereich des Tanks als Abtropfeinrichtung in horizontaler Position fixiert zu werden.

Diese Maßnahme hat den Vorteil daß die Wendescheibe mit doppeltem Nutzen verwendet werden kann, nämlich einmal zum Rühren der Maische und zum anderen zum Abfiltrieren der festen Bestandteile, wenn nach Beendigung des Gär- und Rührvorganges im Tank der Traubensaft an der Tankunterseite abgelassen werden soll. Eine weitere Abtropfeinrichtung ist dann unter Umständen gar nicht mehr erforderlich, weil es ausreicht, die als Sieb ausgebildete Wendescheibe für einige Minuten senkrecht zu stellen, während derer sich die festen Maischebestandteile aufgrund ihres geringeren Gewichtes ohnehin an der Oberfläche der Maische ansammeln. Fixiert man nun die Wendescheibe in horizontaler Position, befinden sich praktisch alle festen Bestandteile oberhalb des Siebes und können daher von den flüssigen Bestandteilen in besonders einfacher Weise durch Ablassen des Saftes getrennt werden.

Bei einem weiteren Ausführungsbeispiel der Erfindung sind die Rührelemente mit Hindernissen in Gestalt parallel zur Achse verlaufender Erhebungen versehen.

Diese Maßnahme hat den Vorteil, daß die an der Unterseite der Rührelemente festgehaltenen festen Maischebestandteile dann, wenn das Rührelement sich durch die untere Extremlage hindurchbewegt, nicht schlagartig nach oben durchrutschen können sondern vielmehr an den Hindernissen hängenbleiben, so daß auch während des Wiederanhebens der festen Bestandteile sich die Auswaschung der Farbstoffe fortsetzt.

Bei einem weiteren Ausführungsbeispiel der Erfindung sind die Rührelemente mit Wärmetauschelementen versehen.

Diese Maßnahme hat den Vorteil, daß durch Einleiten eines Reizmittels in die Wärmetauschelemente schneller die Gärstarttemperatur erreicht werden und andererseits durch Einleiten eines Kühlmittels eine zu hohe Erwärmung und damit Qualitätsverminderung der Maische während des Gärens verhindert werden kann.

Bevorzugt ist dabei, die Wärmetauschelemente an eine Zuleitung und eine Rückleitung anzuschließen, die in der Achse in das Rührelement führen.

Diese Maßnahme hat den Vorteil, daß eine einfache Zu- und Ableitung des Wärmetauschmediums über eine übliche Drehkupplung vorgenommen werden kann.

Insbesondere bei einer als Hohlkörper ausgebildeten Wendescheibe können die Wärmetauschelemente bevorzugt als Wärmetauschkanäle im Hohlkörper ausgebildet sein.

Diese Maßnahme hat den Vorteil, daß die Kanäle einerseits verhältnismäßig einfach aufgebaut werden können und andererseits eine sehr gute Wärmeverteilung über die Fläche der Wendescheibe erzielbar ist.

Bevorzugt können die Wärmetauschkanäle von labyrinthartig angeordneten Wänden im Hohlkörper gebildet werden.

Diese Maßnahme hat den Vorteil, daß die gesamte Oberfläche der Wendescheibe am Wärmetauschprozeß teilnimmt, weil das Wärmetauschmedium auf seinem Weg durch das Labyrinth mit allen Abschnitten der Oberfläche in Wirkverbindung gerät.

Bei einer weiteren bevorzugten Ausführungsform der Erfindung sind die Rührelemente mit einer Randerhöhung versehen, die vorzugsweise allseits umlaufend ausgebildet ist.

Auch diese Maßnahme hat den Vorteil, die festen Maischebestandteile beim Rühren möglichst lange in unmittelbarem Kontakt mit der Wendescheibe zu halten, was dadurch erreicht wird, daß diese festen Bestandteile innerhalb einer Volumens gefangengehalten werden, daß einerseits von der Welle und andererseits von der Randerhöhung gebildet wird.

Eine weitere Ausführungsform der Erfindung zeichnet sich dadurch aus, daß in einem Tank mehrere Rührwerke übereinander angeordnet sind.

Diese Maßnahme hat den Vorteil, daß unter Beibehaltung des günstigen Tankkonzeptes mit einem stehenden zylindrischen Behälter auch große Tankvolumina bei relativ kleiner Stellfläche erreichbar sind. Es könne daher auch in Kleinbetrieben mit relativ beengten Platzverhältnissen Tanks mit großen Rauminhalt vorgesehen werden.

Erfindungsgemäß kann man dabei jeweils einander benachbarte Rührwerke entweder gegenläufig oder gleichläufig drehen.

Der Vorteil dieser Maßnahme ist, daß unterschiedliche Durchmischungsarten einstellbar sind, die bei unterschiedlichen Rebsorten zu einer jeweils optimalen Weinqualität führen. Wenn sich einander benachbarte Rührwerke gleichläufig drehen, kann bei kreisförmigen Wendescheiben vorteilhaft vorgesehen sein, den Abstand der Achsen voneinander größer als das √2-fache des Radius der Wendescheibe zu wählen.

Diese Maßnahme hat den Vorteil, daß die übereinander angeordneten Rührwerke so nahe wie möglich beieinander stehen, ohne daß die Wendescheiben zweier benachbarter Rührwerke aneinander stoßen.

Weiterhin ist eine Ausführungsform mit mehreren Rührwerken bevorzugt, bei der das oberste Rührwerk unmittelbar von einem Antrieb gedreht wird und die unteren Rührwerke entweder über schaltbare Kupplungen von einem Nebenabtrieb des Antriebes oder über weitere, schaltbare Antriebe gedreht werden.

Der Vorteil dieser Maßnahmen ist, daß gegebenenfalls nur das oberste Rührwerk angetrieben werden kann, während die unteren Rührwerke stillstehen können. Ein Antrieb des obersten Rührwerkes alleine kann nämlich dann ausreichen, wenn der Tank voll gefüllt ist und sich die festen Maischebestandteile aufgrund ihres geringeren Gewichtes ohnehin im oberen Tankbereich sammeln. Die unteren Rührwerke würden in diesem Fall nur nahezu reinen Traubensaft durchrühren, wobei die Gefahr besteht, daß dabei Trubstoffe freigesetzt werden, welche die Weinqualität deutlich verschlechtern. Die unteren Rührwerke können beispielsweise nur während der ersten Phase der Behandlung im Tank angetrieben werden, während der die frisch eingefüllte Maische noch in allen Bereichen des Tanks feste Bestandteile erhält. Sind die Rührwerke, wie weiter oben geschildert, mit Wärmetauschelementen versehen, können die unteren Rührwerke später, wenn sie stillstehen, auch zur Erwärmung oder Kühlung der Maische herangezogen werden. Eine selektive Antriebsmöglichkeit der mehreren untereinander angeordneten Rührwerke hat überdies den Vorteil, daß bei unterschiedlichen Befüllungszuständen das jeweils im Bereich der Oberfläche der Maische befindliche Rührwerk angetrieben wird und darüberliegende Rührwerke vollkommen stillgesetzt werden. Auf diese Weisen kann auch die erforderliche Antriebsleistung minimiert werden.

Will man mehrere übereinander liegende Rührwerke mit einem gemeinsamen Antrieb antreiben, kann man hierzu erfindungsgemäß entweder ein Kurbelgetriebe oder ein Kettengetriebe wählen, das gegebenenfalls mit an sich bekannten Kupplungselementen versehen sein kann. Beide Getriebearten haben für den vorliegenden Anwendungsfall den Vorteil, daß sie praktisch vollkommen unempfindlich gegen Feuchtigkeit sind, weil die Getriebeelemente formschlüssig und nicht reibschlüssig zusammenarbeiten.

Schließlich ist noch eine Ausführungsform bevorzugt, bei der die Rührwerke in der Röhe verstellbar sind.

Auch diese Maßnahme hat den Vorteil, daß man die Position des Rührwerks bei nicht vollständig gefülltem Tank an die jeweilige Füllhöhe anpassen kann, so daß einerseits eine besonders effektive Durchmischung im oberen Bereich der Maische eingestellt werden kann, die weiter unten befindlichen reinen Saftanteile jedoch weitgehend ungerührt bleiben.

Bei einer bevorzugten Ausgestaltung der Erfindung besteht der Tank aus Stahl oder Edelstahl, er kann aber, sofern die statischen Bedingungen dies zulassen, aus Kostengründen auch aus Kunststoff, insbesondere glasfaserverstärktem Kunststoff bestehen. Diese Wahlmöglichkeiten hinsichtlich des Materiales gelten auch für die Komponenten des Tanks, d.h. die Rührwerke, Verschlüsse, Siebe und dgl.

Weitere Vorteile ergeben sich aus der Beschreibung und der beigefügten Zeichnung.

Es versteht sich, daß einzelne Merkmale der vorliegenden Erfindung auch jeweils isoliert oder in einer anderen als der angegebenen Kombination mit Vorteil verwirklicht werden können.

Die Erfindung ist in der Zeichnung dargestellt und wird in einer folgenden Beschreibung näher erläutert. Es zeigen:

Fig. 1 eine detaillierte Seitenansicht eines ersten Ausführungsbeispiels eines erfindungsgemäßen Gärtanks;

Fig. 2a und 2b schematische Schnittdarstellungen eines zweiten Ausführungsbeispiels mit zwei übereinander liegenden Rührwerken;

Fig. 3a, 3b eine schematische Darstellung eines dritten und Ausführungsbeispiels mit drei übereinanderliegenden Rührwerken;

Fig. 4 eine schematische Darstellung eines vierten Ausführungsbeispiels mit drei, jedoch untereinander ungleichen übereinanderliegenden Rührwerken;

Fig. 5 eine schematische Darstellung eines Kurbelgetriebes zum gemeinsamen Antreiben mehrerer übereinanderliegender Rührwerke gemäß Fig. 3 oder 4;

Fig. 6 eine Darstellung wie Fig. 5, jedoch für ein Kettengetriebe;

Fig. 7 eine schematische Darstellung eines Ausführungsbeispiels wie Fig. 2a und b, bei dem jedoch die Rührelemente mit Wärmetauschelementen versehen sind;

Fig. 8 eine zum Teil abgebrochene schematische Seitenansicht eines Unterteils eines erfindungsgemäßen Tanks mit schräg angesetztem ausläufstutzen;

Fig. 9a, 9b in vergrößertem Maßstab eine Ausführungsform und einer erfindungsgemäß verwendeten kreisförmigen Wendescheibe als Hohlkörper;

Fig. 10 bis 12 drei Ausführungsbeispiele von kreisförmigen Wendescheiben mit verschiedenen Siebeinsätzen;

Fig. 13 ein Ausführungsbeispiel wie Fig. 2a und b, bei dem eine mit Siebeinsätzen versehene untere Wendescheibe horizontal fixiert ist;

Fig. 14 ein Ausführungsbeispiel wie Fig. 2a und b, jedoch mit in der Höhe verstellbarem Rührwerk,

Fig. 15 eine zum Teil abgebrochene schematische Seitenansicht eines Unterteils einer weiteren Ausführungsform eines erfindungsgemäßen Tanks mit schräg angesetztem Auslaufstutzen;

Fig. 16 eine zum Teil abgebrochene schematische Seitenansicht eines Unterteils eines weiteren Ausführungsbeispiels eines erfindungsgemäßen Tanks mit zentrisch angesetztem Auslaufstutzen;

Fig. 17 eine Seitenansicht eines weiteren Ausführungsbeispiels eines erfindungsgemäßen Tanks mit schräger, ebener Bodenfläche;

Fig. 18a eine Darstellung wie Fig. 17, jedoch für ein weiteres Ausführungsbeispiel mit einer schrägen, gewölbten Bodenfläche;

Fig. 18b eine Ansicht im Schnitt entlang der Linie XVIII-XVIII von Fig. 18a.

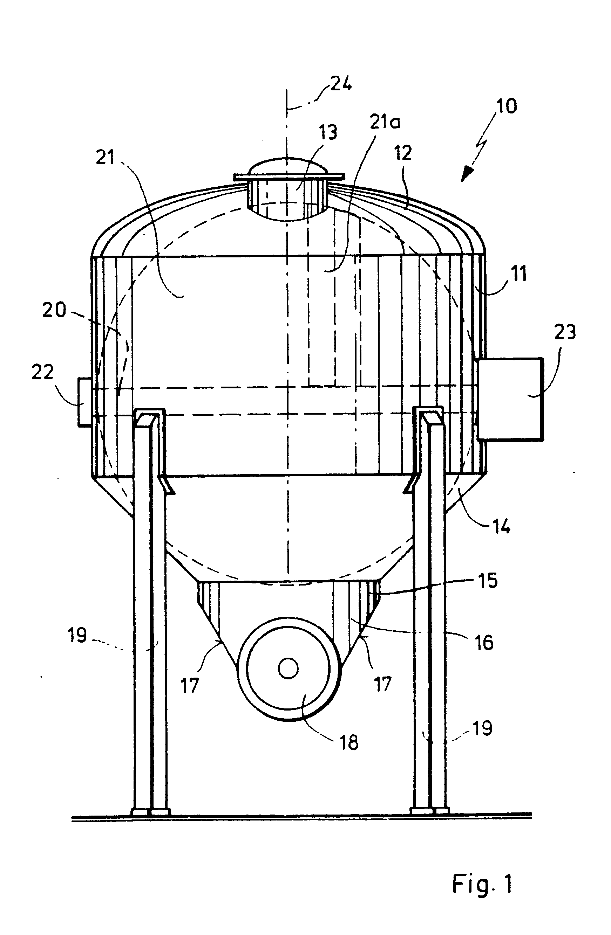

In Fig. 1 ist 10 ein stehender Tank dessen mittlerer Abschnitt von einem zylindrischen Teil 11 gebildet wird. An dessen Oberseite ist ein gewölbter Dom 12 mit einer Einfüllöffnung 13 angesetzt. An den unteren Rand des zylindrischen Teiles 11 schließt sich ein sich nach unten verjüngender konischer Teil 14 an, der in einen zylindrischen Abschnitt 15 übergeht. Der zylindrische Abschnitt 15 ist im Abstand vom konischen Teil 14 seitlich von zwei ebenen Schrägflächen 17 begrenzt, die unten in einer Rundung zusammenlaufen, in der eine Austragschnecke 18 mit einer Achse parallel zu den Schrägflächen 17 angeordnet ist. Der Tank 10 steht auf vier Beinen 19, die den Tank 10 im Bereich des Überganges vom zylindrischen Teil 11 zum konischen Teil 14 tragen. Die Höhe der Beine 19 ist so bemessen, daß die Austragschnecke 18, die gleichzeitig als Ablauf für den flüssigen Tankinhalt dienen kann, sich in einem ausreichenden Abstand vom Boden befindet.

Der Tank 10 sowie ggf. vorgesehene Komponenten wie Rührwerke, Siebe, Verschlüsse und dgl. können aus Stahl, Edelstahl oder Kunststoff, insbesondere glasfaserverstärktem Kunststoff bestehen.

Der vorstehend geschilderte Tank 10 dient zur Behandlung von Rotweinmaische, die bekanntlich während des Gärens gerührt werden muß, um die Farbstoffe aus den festen Maischebestandteilen, insbesondere den Traubenschalen herauszulösen.

Erfindungsgemäß ist nun vorzugsweise im Bereich des zylindrischen Teiles 11 eine horizontale Achse 20 angeordnet, die auf der einen Seite des zylindrischen Teiles 11 in einem Lager 22 läuft und im Bereich der gegenüberliegenden Wandung des zylindrischen Teiles 11 von einem in Fig. 1 nur schematisch angedeuteten Antrieb 23 angetrieben wird. An der somit senkrecht zur Hochachse 24 des Tanks 10 verlaufenden Achse 20 ist eine kreisförmige Wendescheibe 21 befestigt. Man erkennt aus Fig. 1 bereits sehr deutlich, daß die Form des Tankes 10 mit dem zylindrischen Teil 11, dem Dom 12, dem konischen Teil 14 und dem zylindrischen Abschnitt 15 weitgehend einer Kugelgestalt angeglichen ist, so daß die kreisförmige Wendescheibe 21 das Tankvolumen praktisch vollständig überstreicht.

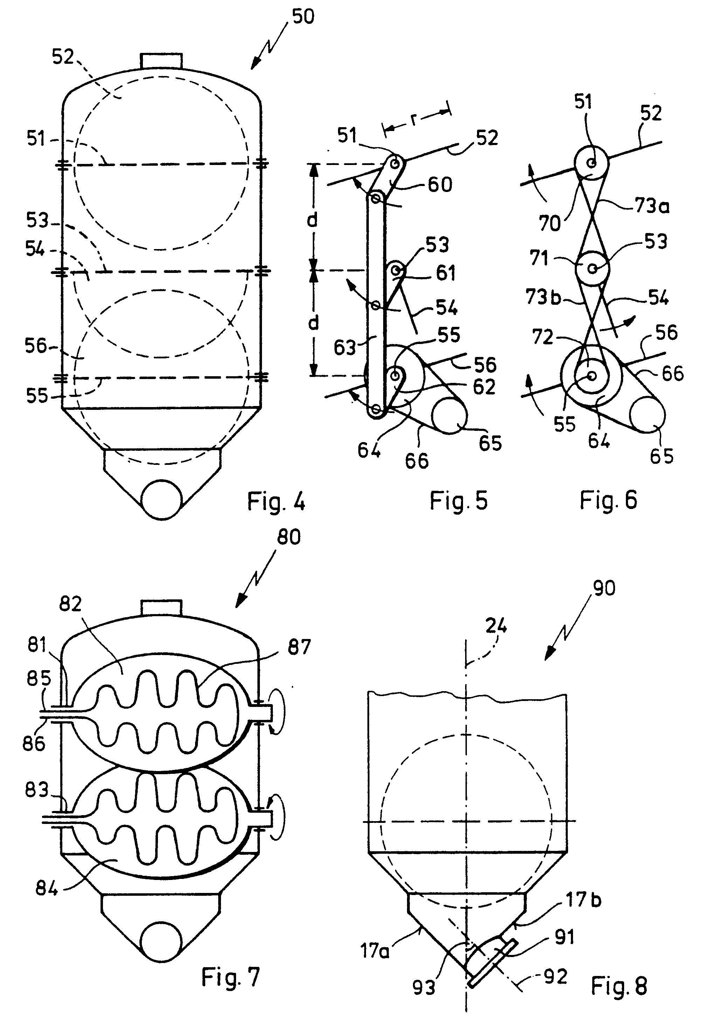

Es versteht sich, daß im Rahmen der vorliegenden Erfindung die unterechiedlichsten Rührelemente verwendet werden können, sofern sie nur beim Drehen der horizontalen Welle 20 ein Kugelvolumen nahezu vollständig überstreichen. Hierzu können in erster Linie natürlich kreisförmige oder - wie weiter unten noch ausführlich geschildert werden wird - halbkreisförmige Wendescheiben verwendet werden, es sind aber auch mehrteilige, sternförmige, mehrere paddelartige und sonstige Rührelemente im Rahmen der vorliegenden Erfindung verwendbar, wie in Fig. 4 mit dem Bezugszeichen 21a angedeutet.

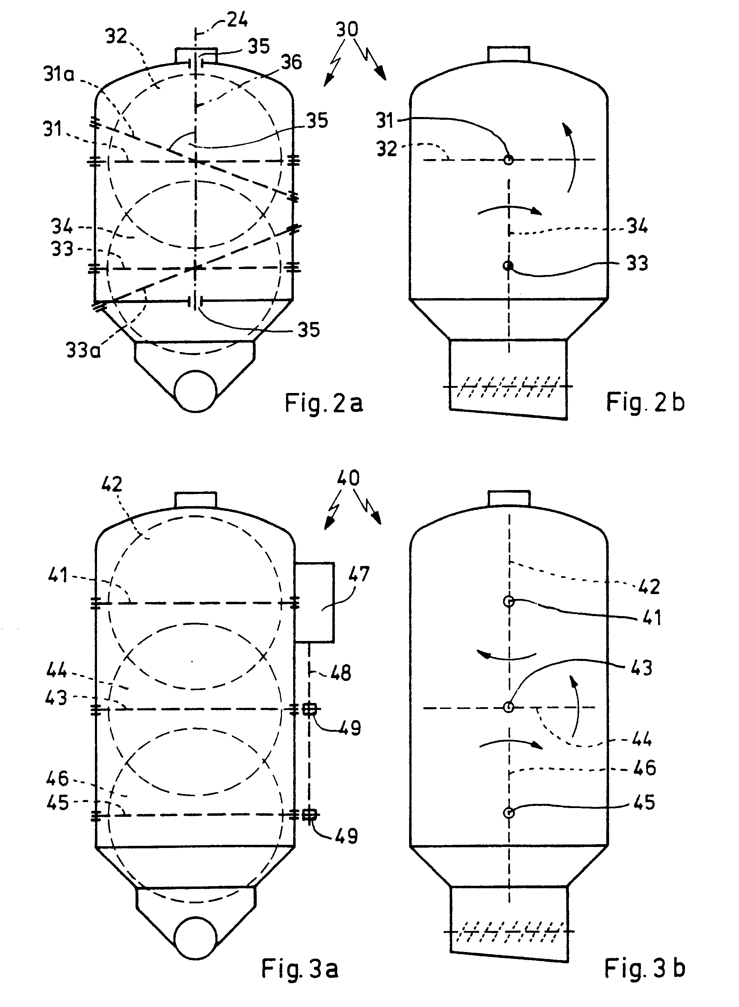

Beim Ausführungsbeispiel gemäß Fig. 2a und 2b, die um 90° gedrehte schematische Ansichten zeigen, ist der Rotweinmaische-Gärtank mit 30 bezeichnet. Um eine obere Achse 31 ist eine obere Wendescheibe 32 und um eine untere Achse 33 eine untere Wendescheibe 34 drehbar angeordnet. Wie man aus den Pfeilen von Fig. 2b erkennen kann, ist die Drehrichtung der Wendescheiben 32, 34 gegenläufig, beispielsweise dreht sich die Wendescheibe 32 im Gegenuhrzeigersinn und die Wendescheibe 34 im Uhrzeigersinn. Bei diesem Drehsinn, bei dem die Wendescheiben 32, 34 nach Art eines Zahnrades miteinander "kämmen", können die Achsen 31, 33 besonders nahe beieinander angeordnet sein, weil ein Zusammenstoßen der Wendescheiben 32, 34 nicht möglich ist.

In Fig. 2a ist noch die Variante der Erfindung gezeigt, bei der die Achsen 31a, 33a der übereinanderliegenden Wendescheiben unter einem Winkel 35, der ungleich 90° ist, gegenüber Rochachse 24 geneigt verlaufen. Die Achsen 31a, 33a können dabei, wie in Fig. 2a dargestellt, gegensinnig geneigt verlaufen, sie können aber auch zueinander parallel und um denselben Winkel 35 geneigt verlaufen.

Bei einer weiteren Variante von Fig. 2a ist mit Lagern 35 angedeutet, daß die Achse 36 auch senkrecht verlaufen kann, an der ein oder mehrere Maischewender angeordnet sind.

Beim Ausführungsbeispiel gemäß Fig. 3a und 3b ist der Rotweinmaische-Gärtank mit 40 bezeichnet. Um eine obere Achse 41 ist eine obere Wendescheibe 42, um eine mittlere Achse 43 eine mittlere Wendescheibe 44 und um eine untere Achse 45 eine untere Wendescheibe 46 drehbar angeordnet. Ein Antrieb 47 befindet sich auf der Höhe der oberen Achse 41 und treibt diese unmittelbar an. Über einen mit 48 angedeuteten Nebenantrieb sind die mittlere Achse 43 und die untere Achse 45 über schaltbare Kupplungen 49 ebenfalls vom Antrieb 47 antreibbar.

Wie mit Pfeilen in Fig. 3b angedeutet, drehen sich jeweils benachbarte Wendescheiben 42, 44 bzw. 44, 46 gegensinnig. Der Abstand der Achsen 41, 43, 45 voneinander kann damit minimal gehalten und damit das Gesamtvolumen des Tanks 40 auch optimal überstrichen werden.

Beim Einfüllen der Maische in den Tank 40 können nun beispielsweise durch Zuschalten der Kupplungen 49 zunächst alle drei Wendescheiben 42, 44, 46 in Betrieb gesetzt werden. Sind jedoch nach einer gewissen Zeit die festen Maischebestandteile aufgrund ihres geringeren Gewichtes in den oberen Teil des Tankes 40 aufgestiegen, kann man die Kupplungen 49 lösen und nur noch die oberste Wendescheibe 42 mit dem Antrieb 47 antreiben. Im Bereich der mittleren und unteren Wendescheiben 44, 46 befindet sich dann nämlich nur noch Traubensaft ohne feste Bestandteile, in dem bei andauerndem Durchrühren nur unnötig Trubstoffe freigesetzt würden.

Es versteht sich von selbst, daß statt des Nebenantriebs 48 und der schaltbaren Kupplungen 49 auch jede Achse 41, 43, 45 mit einem eigenen, separat schaltbaren Antrieb versehen sein kann. Auch kann im Antrieb 47 eine Trennkupplung für die Achse 41 vorgesehen sein, so daß der gemeinsame Antrieb 47 wahlweise nur untere Achsen 43 oder 45 antreiben kann. Bei einer derartigen Möglichkeit des selektiven Antriebes jede der drei Achsen 41, 43, 45 können unterschiedliche Befüllungszustände des Tanks 40 berücksichtigt werden. Wird beispielsweise Maische nur bis kurz oberhalb der Achse 43 eingefüllt, kann die obere Wendescheibe 42 stillgesetzt werden und nur die mittlere Wendescheibe 44 und die untere Wendescheibe 46 oder die mittlere Wendescheibe 44 alleine dient dann zum Rühren der Maische.

Beim Ausführungsbeispiel gemäß Fig. 4 ist eine Anordnung ähnlich Fig. 3a und 3b vorgesehen. An einer oberen, mittleren und unteren Achse 51, 53, 55 befinden sich wieder eine obere eine mittlere und eine untere Wendescheibe 52, 54, 56 jedoch mit der Abweichung daß die mittlere Wendescheibe 54 nur als halbkreisförmige Scheibe ausgebildet ist. Diese Maßnahme kann insbesondere bei gleichläufiger Drehbewegung der Achsen 51, 53, 55 zu einer Verringerung der Achsabstände führen.

Diese gleichsinnige Drehung der Achsen 51, 53, 55 ist beim Ausführungsbeispiel gemäß Fig. 5 veranschaulicht, bei dem die drei Achsen 51, 53, 55 gemeinsam über ein Kurbelgetriebe angetrieben werden. Das Kurbelgetriebe besteht aus Kurbeln 60, 61, 62, die fest mit den Achsen 51, 53, 55 verbunden sind. Am jeweils anderen Ende der Kurbeln 60, 61, 62 ist gelenkig eine gemeinsame Schubstange 63 angeordnet. Wird nun zum Beispiel in die unterste Achse 55 über ein Kettenrad 64 und eine Kette 66 von einem Kettenrad 65 eines in Fig. 5 nicht dargestellten Antriebes angetrieben, dreht sich die Achse 55, beispielsweise im Uhrzeigersinne und damit die untere Wandsscheibe 56. Über die Kurbel 62 und die Schubstange 63 sowie die Kurbeln 60 und 61 wird diese gleichsinnige Drehbewegung in an sich bekannter Weise auf die oberen Achsen 51 und 53 übertragen.

Es ist leicht einzusehen, daß bei gleichsinniger Drehung der Achsen 51, 53, 55 der Abstand d der Achsen 51, 53, 55 voneinander um das $\sqrt{2}$-fache größer sein muß als der Radius r einer Wendescheibe 52, weil sonst der jeweils untere Teil siner oberen Wendescheibe mit dem jeweils oberen Teil einer unteren Wendescheibe kollidieren würde.

Beim Ausführungsbeispiel gemäß Fig. 6 wird eine jeweils gegensinnige Drehung einander benachbarter Achsen 51, 53 bzw. 53, 55, dadurch erreicht, daß die Achsen 51, 53, 55 mit Kettenrädern 70, 71, 72 versehen sind, über die eine ein- oder zweiteilige, zwischen zwei Achsen 51, 53 bzw. 53, 55 jeweils verschränkte Kette 73a, 73b läuft.

Es versteht sich jedoch, daß die vorliegende Erfindung keinesfalls auf die in Fig. 5 und 6 dargestellten gemeinsamen Antriebsmechanismen beschränkt ist, es können vielmehr auch sonstige an sich bekannte gemeinsame Antriebe mechanischer, elektrischer oder hydraulischer Art verwendet werden.

Das Ausführungsbeispiel gemäß Fig. 7 entspricht demjenigen von Fig. 2a und 2b und zeigt einen Tank 80, bei dem in perspektivischer Darstellung um eine obere und eine untere Achse 81, 83 eine obere und eine untere Wendescheibe 82, 84 drehbar angeordnet sind.

In Weiterbildung der bisher geschilderten Ausführungsbeispiele ist beim Tank 80 gemäß Fig. 7 in den Wendescheiben 82, 84 jeweils eine Wärmetauscheinrichtung vorgesehen, die über eine Zuleitung 85 bzw. eine Rückleitung 86 versorgt wird. Die Wärmetauschelemente 87 durchsetzen die Wendescheiben 82, 84 vorzugsweise mäanderartig. Die Zu- bzw. Rückleitung 86 sind durch die Achsen 81 bzw. 83 geführt, beispielsweise als koaxiale Rohrleitungen, so daß übliche Flüssigkeits-Drehkupplungen verwendet werden können.

Nach dem Einfüllen der Maische in den Gärtank 80 wird vorzugsweise ein Heizmedium duch die Wärmetauschelemente 87 geleitet, so daß die eingefüllte Maische schnell die Gärstarttemperatur erreicht. Hat die Maische zu gären begonnen, kann ein Kühlmittel durch die Wärmetauschelemente 87 geleitet werden so daß eine Überhitzung der Maische vermieden wird.

Beim Ausführungsbeispiel gemäß Fig. 8 wird eine von den bisher geschilderten Ausführungsbeispielen geänderte Konfiguration am Tankboden verwendet. Der Gärtank 90 gemäß Fig. 8 ist bis in den Bereich der ebenen Schrägflächen 17a, 17b so ausgebildet, wie beispielsweise das Ausführungsbeispiel gemäß Fig. 1. In Abweichung hiervon geht der Gärtank 90 jedoch im Bereich der ebenen Schrägfläche 17a unmittelbar und im Bereich der ebenen Schrägfläche 17b unter Abknickung in einen schrägen Rohrstutzen 91 über, der um einen Winkel 93 gegenüber der Hochachse 24 des Tanks 90 geneigt ist.

Das Ausführungsbeispiel gemäß Fig. 8 eignet sich insbesondere für einfache und kleine Tanks, bei denen eine aktive Austrageinrichtung in Gestalt einer Austragschnecke, wie sie in Fig. 1 mit 18 bezeichnet ist, nicht erforderlich ist. Der verhältnismäßig geringe Inhalt des Tanks 90 kann vielmehr von selbst über den schrägen Rohrstutzen 91 in Richtung der Achse 92 nach außen fließen bzw. rutschen.

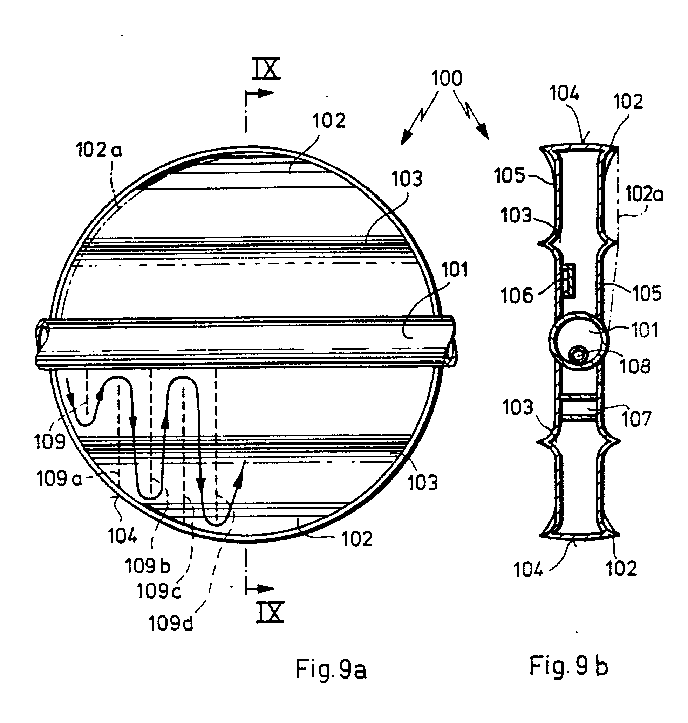

Die in Fig. 9a und 9b in vergrößertem Maßstab dargestellte Wendescheibe 100 ist an eine Rohlwelle 101 angeformt. In einem Randbereich, beispielsweise nur parallel zur Hohlwelle 101 ist eine Randerhöhung 102 vorgesehen, die jedoch, wie mit 102a angedeutet, auch allseits umlaufend ausgebildet sein kann. Weiterhin ist parallel zur Hohlwelle 101 in einem Abstand von etwa dem halben Radius der Wendescheibe 100 ein Hindernis 103 angeordnet, das als spitze Erhebung aus der ansonsten flachen Oberfläche der Wendescheibe 100 ausgebildet ist, wie man besonders gut in Fig. 9b im Querschnitt erkennen kann. Der Sinn dieser Hindernisse 103 ist, daß die festen und leichteren Bestandteile der Maische nicht ohne weiteres an der Wendescheibe 100 nach oben rutschen können, wenn diese beispielsweise in der senkrechten Position von Fig. 9b ist. Insgesamt werden die festen Maischebestandteile innerhalb des Volumens festgehalten, das die Randerhöhung 102, 102a zusammmen mit den Hindernissen 103 über der Oberfläche der Wendescheibe 100 bildet.

Die Oberfläche 104 an der Stirnseite der Wendescheibe 100 ist bevorzugt ballig ausgebildet, so daß eine besonders gute Passung an den Innenseiten des jeweiligen Tanks erreicht werden kann.

Weiterhin erkennt man aus der Schnittdarstellung von Fig. 9b, daß die Wendes scheibe 100 gemäß diesem Ausführungsbeispiel als ein aus Blech 105 gebildeter Hohlkörper ausgebildet ist. Weiterhin ist die Anordnung gemäß Fig. 9a und 9b in beiden Drehrichtungen wirksam, so daß sowohl die Ober- als auch die Unterseite der Wendescheibe 100 mit entsprechenden Randerhöhungen 102, 102a und Hindernissen 103 versehen ist.

Weiterhin erkennt man, daß bei einem derartigen Hohlkörper Wärmetauscherkanäle 106, 107 in einfacher Weise dadurch hergestellt werden können, daß entweder, wie beim Wärmetauscherkanal 106 angedeutet, ein U-förmiges Profil von unten an das die Oberfläche bildende Blech 105 angeschweißt wird oder daß, wie bei 107 angedeutet, durch zwei Stege innerhalb des Hohlraums ein Wärmetauscherkanal hergestellt wird. Es können natürlich auch geeignete Rohrleitungen, z. B. Kupferrohre von Innen gegen daß Blech 105 gelötet, geklebt oder geklemmt werden.

In Fig. 9a ist weiterhin eine Variante einer Wärmetauscheranordnung eingezeichnet, bei der die Wendescheibe 100 mit radial zur Hohlwelle 101 angeordneten, labyrinthartig verteilten Wänden 109, 109a, 109b, 109c und 109d versehen ist. Diese Wände sind jeweils abwechselnd an die Hohlwelle 101 angesetzt (109, 109b, 109d) bzw. an den Umfang der Wendescheibe 100 angesetzt (109a, 109c). Hierdurch ergibt sich ein Kreislauf eines Wärmetäuschmittels, wie er mit einer mit Pfeilen versehenen Linie in Fig. 9a eingetragen ist. Man erkennt, daß das Wärmetauschmedium auf seinem Weg durch das von den Wänden 109 bis 109d gebildete Labyrinth mit der gesamten Oberfläche der Wendescheibe 100 in Verbindung tritt, so daß die gesamte Oberfläche am Wärmetauschprozeß teilnimmt.

Schließlich erkennt man in Fig. 9b noch eine Leitung 108, die zum Zu- oder Abführen von Wärmetauschermedium dient, wie dies mit 85 und 86 bereits in Fig. 7 erläutert wurde.

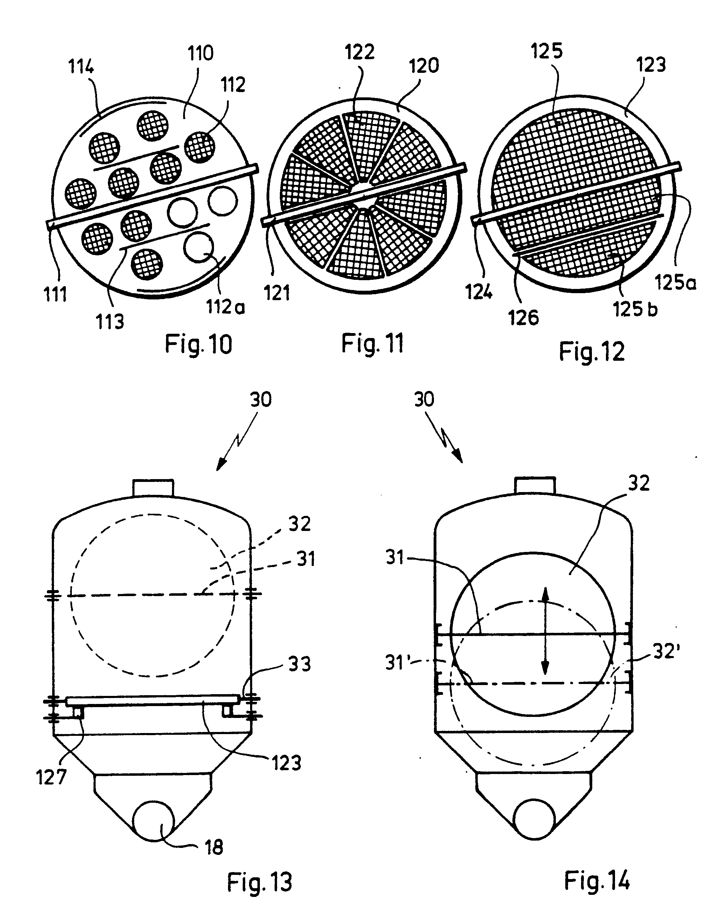

Die Fig. 10 bis 12 zeigen drei weitere unterschiedliche Ausführungsformen von Wendescheiben, die mit Siebeinsätzen versehen sind.

Bei einer Wendescheibe 110 gemäß Fig. 10 sind eine Anzahl kreisförmiger Siebeinsätze 112 vorgesehen, so daß Traubensaft praktisch ungehindert durch die Oberfläche 110 am Orte der Siebeinsätze 112 hindurchströmen kann. Bevorzugt sind die Siebeinsätze 112 etwa parallel zu einer Welle 111 angeordnet, so daß in einem Zwischenraum zwischen zwei Reihen Siebeinsätzen 112 ein Hindernis 113 parallel zur Welle 111 vorgesehen werden kann, wie dies mit 103 weiter oben zu Fig. 9a und 9b beschrieben wurde. Auch eine Randerhöhung 114 kann vorgesehen sein.

Die Siebeinsätze 112 sind vorzugsweise herausnehmbar, sie können auch ganz oder teilweise fehlen, wie mit 112a angedeutet.

Beim Ausführungsbeispiel gemäß Fig. 11 ist eine Wendescheibe 120 an einer Welle 121 befestigt, wobei z. B. acht segmentförmige Siebeinsätze 122 vorgesehen sind, die sich radial vom Mittelpunkt der Wendescheibe 120 fort erstrecken. Auf diese Weise ergibt sich eine mechanisch stabile Anordnung mit dennoch großer Siebfläche.

Das Ausführungsbeispiel gemäß Fig. 12 zeigt eine Wendescheibe 123 an einer Welle 124 mit einem Siebeinsatz 125, der praktisch die gesamte Oberfläche der Wendescheibe 123 einnimmt. Man kann diesen Siebeinsatz 125 auch in zwei zur Welle 124 parallele Streifen 125a, 125b unterteilen, zwischen denen dann ein Rindernis 126 angeordnet sein kann.

Die Siebeinsätze 112, 122, 125 der Ausführungsbeispiele gemäß Fig. 10 bis 12 bewirken, daß die festen Maischebestandteile, insbesondere die Traubenschalen durch den Traubensaft hindurchgerührt werden können und dabei besonders effektiv vom Traubensaft umspült werden.

Die Wendescheiben 110, 120, 123, insbesondere das mit einem großflächichen Siebeinsätz 125 versehene Ausführungsbeispiel 123 können gleichzeitig als Abtropfeinrichtung dienen, wie in Fig. 13 veranschaulicht ist.

Man erkennt, daß ein Tank 30, wie er bereits in Fig. 2a und 2b im einzelnen erläutert wurde, eine untere Wendescheibe 123 gemäß Fig. 12 aufweist. Diese Wendescheibe 123 dient zunächst in der beschriebehen Weise zum Rühren der Rotweinmaische. Nach Abschluß des Gärvorganges wird nun die Wendescheibe 123 für eine kurze Zeit in eine senkrechte Stellung gebracht, so daß alle festen Maischebestandteile an die Oberfläche der Maische steigen können. Die Wendescheibe 123 wird nun in eine horizontale Position gebracht, wie sie in Fig. 13 eingezeichnet ist und dort mit Bolzen 127 in der horizontalen Position fixiert. Nun kann im Bereich der Austragschnecke 18 ein Auslaß für den Traubensaft geöffnet werden. Da sich praktisch sämtliche festen Maischeanteile oberhalb der jetzt als Abtropfeinrichtung dienenden, horizontal fixierten Wendescheibe 123 befinden, wird der Traubensaft von diesen festen Bestandteilen abfiltriert und die festen Bestandteile sammeln sich in Fig. 13 oberhalb der Wendescheibe 123 an und bilden dort den sogenannten Tresterkuchen. Bevor dieser nun zu einer nur noch schwer trennbaren Masse verklumpt, wird die Wendescheibe 123 nach Herausziehen der Bolzen 127 wieder in die senkrechte Stellung gebracht und die Trester fallen nach unten in den Bereich der Austragschnecke 18, wo sie in an sich bekannter Weise aus dem Tank 30 ausgetragen werden. Auch kann man die Wendescheibe 123 um 180° drehen und wieder fixieren, sodaß die Tresterstücke nach unten fallen und im übrigen mit einem Wasserstrahl durch die Öffnung 13 im Dom 12 abgelöst werden können.

Schließlich zeigt Fig. 14 noch eine weitere Variante des Tanks 30, bei der beispielsweise die Achse 31 der oberen Wendescheibe 32 in der Höhe verstellbar angeordnet ist, wie mit dem Doppelpfeil angedeutet. Die Achse 31 mit der Wendescheibe 32 kann dann beispielsweise in eine Position gebracht werden, wie sie in Fig. 14 mit 31' und 32' angedeutet ist. Auf diese Weise kann das durch die Wendescheibe 32 gebildete Rührwerk an unterschiedliche Befüllungszustände des Tanks 30 angepaßt werden, in der Weise, daß sich die Wendescheibe 32 stets im Bereich der Oberfläche der Maische dreht.

Um Dichtigkeitsproblemen des Tanks 30 vorzubeugen, kann beim Ausführungsbeispiel gemäß Fig. 14 der gemeinsame Antrieb von mehreren Achsen 31, sofern solche vorhanden sind, ebenfalls an der Innenseite des Tanks angeordnet sein, wobei zum Beispiel in Stufen oder stufenlos verstellbare Kurbelgetriebe gemäß Fig. 5, die besonders wenig bewegte Teile haben, vorgesehen sein können.

Es versteht sich, daß die geschilderten Tanks, die Achsen, die Wendescheiben und die übrigen Teile wie Siebeinsätze, Antriebe und dgl. bevorzugt aus Edelstahl hergestellt werden, es kann jedoch auch normaler, entsprechend geschützter Stahl verwendet werden, auch sind für nichttragende Elemente, beispielsweise die Wendescheiben und die Siebeinsätze Kunststoff einsetzbar. Zum Beispiel kann die Wendescheibe 100 gemäß Fig. 9a und 9b als Kunststoffspritzteil oder Kunststoffblasteil hergestellt werden.

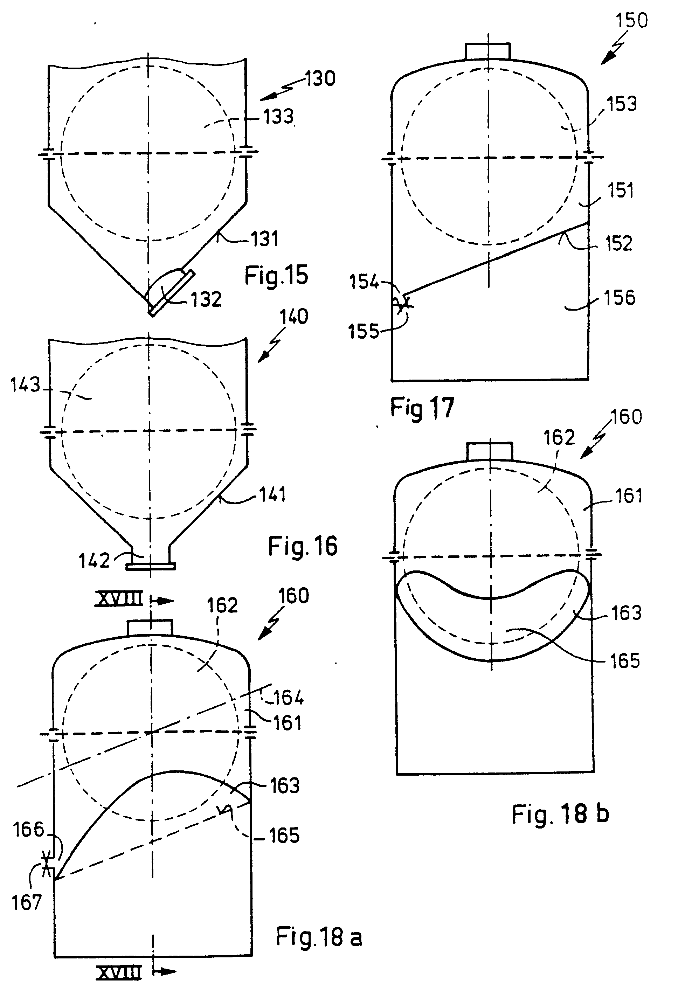

Fig. 15 zeigt mit einem Tank 130 eine weitere Variante, die derjenigen von Fig. 8 ähnelt. Der Tank 130 weist im unteren Bereich ebenfalls einen konischen Teil 131 auf, an den sich jedoch bei diesem Ausführungsbeispiel ein schräger Rohrstutzen 132 unmittelbar anschließt. Hierzu geht eine schräge seitliche Fall-Linie des konischen Teile 131 unmittelbar in den schrägen Rohrstutzen 132 über, während die gegenüber liegende Fall-Linie entsprechend abgeknickt verläuft. Auch in diesem Fall wird eine gute Annäherung an ein Kugelvolumen erreicht, weil eine Wendescheibe 133 in ihrem unteren Bereich in den konischen Teil 131 hineinragt und daher das untere Volumen des Tanks 130 praktisch vollkommen überstreicht.

In Fig. 16 ist eine weitere Variante dargestellt, die ebenfalls denjenigen von Fig. 8 und Fig. 15 ähnelt.

Ein Tank 140 ist in Fig. 16 ebenfalls an seiner Unterseite mit einem konischen Teil 141 versehen, der jedoch in diesem Falls in einen zentrischen Rohrstutzen 142 übergeht, der sich vom tiefsten Punkt des konischen Teils 141 senkrecht nach unten erstreckt. Eine Wendescheibe 143 ragt wiederum mit ihrem unteren Abschnitt bis in den Bereich des konischen Teiles 141 hinein.

Die Ausführungsform gemäß Fig. 16 eignet sich besonders für kleinere Stutzen 142, wie sie üblicherweise dazu verwendet werden, um einen Weinmaischetank von unten über einen geeigneten Schlauch leerzupumpen.

Beim Ausführungsbeispiel gemäß Fig. 17 ist ein Tank 150 mit einem zylindrischen Teil 151 versehen, der an seiner Unterseite von einer schrägen, ebenen Bodenfläche 152 begrenzt ist. Eine Wendescheibe 153 ist im wesentlichen im Bereich des zylindrischen Teiles 151 angeordnet, ragt jedoch im unteren Bereich an die Bodenfläche 152 heran, die in geringem Abstand tangential zur Wendescheibe 153 verläuft. Durch die schräge, ebene Bodenfläche 152 ergibt sich ein tiefster Punkt 154 des Tanks 150, an dem ein Ablaßventil 155 angeordnet sein kann, das beim Ausführungsbeispiel gemäß Fig. 17 zu einer Saftkammer 156 führt, die unterhalb des Tanks 150 angeordnet ist. Die Saftkammer 156 kann dabei als einstückige Fortsetzung des zylindrischen Teiles 151 ausgebildet sein, es ist jedoch auch möglich, den Tank 115 an seiner schrägen, ebenen Bodenfläche 152 auf einen Sockel oder ein Stativ aufzusetzen, in dessen Bodenbereich sich eine separate Saftkammer 156 befindet, die beispielsweise in Fig. 17 nach rechts herausgezogen werden kann.

Die Fig. 18a und 18b zeigen in Seitenansicht bzw. im Schnitt eine weitere Ausführungsform, bei der ein Tank 160 mit einem zylindrischen Teil 161 versehen ist, in dem wiederum eine Wendescheibe 162 angeordnet ist. Der zylindrische Teil 161 wird an seiner Unterseite von einer schrägen, jedoch gewölbten Bodenfläche 163 begrenzt. Die schrägen gewölbte Bodenfläche 163 hat vorzugsweise die Gestalt einer Zylindermantelfläche, wobei die in Fig. IXa mit 164 bezeichnete, gedachte Zylinderachse durch den Mittelpunkt der Wendescheibe 162 führt. Damit ist die Bodenfläche 163 eine tangentiale Hüllfläche zu dem von der Wendescheibe 162 überstrichenen kugelförmigen Volumen. Außerdem bildet sich am Grund der Bodenfläche 163 eine gerade Fall-Linie 165 aus, die an ihrem unteren Ende den tiefsten Punkt 166 des Tanks 160 bildet. Beim Ausführungsbeispiel gemäß Fig. 18 ist am tiefsten Punkt 166 ein Ablaßventil 167 vorgesehen, das, im Gegensatz zum Ausführungsbeispiel von Fig. 17, nach außen weist. Es versteht sich jedoch, daß die Ventile 155 bzw. 167 der Fig. 17 und 18 auch jeweils vertauscht werden können.

**Patentansprüche**

1. Stehender Tank zur Behanglung von flüssigen Nahrungsmitteln mit Feststoffbestandteilen, insbesondere Rotweinmaische, mit einem im wesentlichen zylindrischen Teil (11; 151; 161) mit einer Hochachse (24), und mit einem im Tank (10; 30; 40; 50; 80; 90; 130; 140; 150; 160) angeordneten Rührwerk, das um eine oder mehrere, mindestens näherungsweise horizontal verlaufende Achsen (20; 31; 33; 31a; 33a; 41, 43, 45; 51, 53, 55; 81, 83) im Tank (10; 30; 40; 50; 80; 90; 130; 140; 150; 160) drehbar ist und mit seinen Rührelementen einen Raumbereich mit kugelförmigem Umriß überstreicht, dadurch gekennzeichnet, daß die Rührelemente als im wesentlichen kreisförmige oder halbkreisförmige, das gesamte Volumen des Raumbereiches erfassende Wendescheiben (21; 32, 34; 42, 44, 46; 52, 54, 56; 82, 84; 100; 110; 120; 123; 133; 143; 153; 162) ausgebildet und für die Feststoffbestandteile undurchlässig sind.

2. Tank nach Anspruch 1, daduch gekennzeichnet, daß die Wendescheibe (100), vorzugsweise mittels Blechen (105), als flacher Hohlkörper ausgebildet ist.

3. Tank nach Anspruch 1 oder 2, dadurch gekennzeichnet, daß die Wendescheibe (110; 120; 123) mit vorzugsweise herausnehmbaren Siebeinsätzen (112; 122; 125) versehen ist.

4. Tank nach einem der Ansprüche 1 bis 3, dadurch gekennzeichnet, daß der zylindrische Teil (11) an der Oberseite mit einem gewölbten Dom (12) und an der Unterseite mit einem konischen Teil (14; 131; 141) abgeschlossen ist.

5. Tank nach Anspruch 4, dadurch gekennzeichnet, daß an die Unterseite des konischen Teiles (14) ein zylindrischer Abschnitt (15) angesetzt ist, der im unteren Bereich von ebenen Schrägflächen (17) begrenzt ist, zwischen denen eine Austragschnecke (18) angeordnet ist.

6. Tank nach Anspruch 4, dadurch gekennzeichnet, daß an die Unterseite des konischen Teiles (14) ein zylindrischer Abschnitt (15) angesetzt ist, der im unteren Bereich von ebenen Schrägflächen (17) begrenzt ist, von denen die eine (17a) direkt und die andere (17b) unter Abknickung in einen schräg zur Hochachse (24) angeordneten Rohrstutzen (91) übergeht.

7. Tank nach Anspruch 4, dadurch gekennzeichnet, daß die Unterseite des konischen Teiles (131) in einen schräg angesetzten Rohrstutzen (132) übergeht.

8. Tank nach Anspruch 4, dadurch gekennzeichnet, daß die Unterseite des konischen Teiles (141) in einen zentrischen Rohrstutzen (142) übergeht.

9. Tank nach einem der Ansprüche 1 bis 3, dadurch gekennzeichnet, daß der zylindrische Teil (151) an seiner Unterseite von einer schrägen, ebenen Bodenfläche (152) begrenzt ist.

10. Tank nach einem der Ansprüche 1 bis 3, dadurch gekennzeichnet, daß der zylindrische Teil (161) an seiner Unterseite von einer schrägen, gewölbten Bodenfläche (173) begrenzt ist.

11. Tank nach Anspruch 10, dadurch gekennzeichnet, daß die Bodenfläche (163) zylindermantelförmig ist, wobei die Zylinderachse (164) den Mittelpunkt des Rührwerks schneidet.

12. Tank nach einem der Ansprüche 9 bis 11, dadurch gekennzeichnet, daß unterhalb der Bodenfläche (152, 163) eine Saftkammer (156) angeordnet ist, die mit dem Inneren des Tanks (150) über ein Ablaßventil (155) verbindbar ist.

13. Tank nach einem der Ansprüche 1 bis 12, dadurch gekennzeichnet, daß die Rührelemente mit Hindernissen (103; 113, 114; 126) in Gestalt von parallel zur Achse (101; 111; 121; 124) verlaufenden Erhebungen oder von Randerhöhungen (102, 102a) versehen sind.

14. Tank nach einem dem Ansprüche 1 bis 13, dadurch gekennzeichnet daß die Rührelemente mit Wärmetauschelementen (87) versehen sind.

15. Tank nach einem der Ansprüche 1 bis 14, dadurch gekennzeichnet, daß in einem Tank (30; 40; 50; 80; 90) mehrere Rührwerke übereinander angeordnet sind.

16. Tank nach Anspruch 15, dadurch gekennzeichnet, daß das oberste Rührwerk unmittelbar von einem Antrieb (47) gedreht wird und daß die unteren Rührwerke entweder über schaltbare Kupplungen (49) von einem Nebenabtrieb (48) des Antriebes (47) oder über weitere, schaltbare Antriebe getrieben werden.

17. Tank nach Anspruch 15 oder 16, dadurch gekennzeichnet, daß die Rührwerke in der Höhe verstellbar sind.

## Claims

1. An upright tank for treating liquid food-stuff containing solid components, particularly red wine grape mash, comprising a substantially cylindrical portion (11; 151; 161) with a vertical axis (24), and further comprising an agitator, arranged in said tank (10; 30; 40; 50; 80; 90; 130; 140; 150; 160), said agitator being rotatable about one or more axes (20; 31; 33; 31a; 33a; 41, 43, 45; 51, 53, 55; 81, 83) extending substantially horizontally and sweeping with its agitator elements through a volume of spherical shape, characterized in that said agitator elements are designed as substantially circular or semi-circular roll-over disks (21; 32, 34; 42, 44, 46; 52, 54, 56; 82, 84; 100; 110; 120; 123; 133; 143; 153; 162), ceasing the spherical volume entirely and being designed unpermeable for said solid components.

2. The tank according to claim 1, characterized in that the roll-over disk (100) is designed as a flat hollow body, preferably made of sheet-metal (105).

3. The tank according to claim 1 or 2, characterized in that the roll-over disk (110; 120; 123) is provided with screen inserts (112; 122; 125) being preferably removable.

4. The tank according to any of claims 1 through 3, characterized in that the cylindrical portion (11) at its upper side ends in a curved cover (12) whereas its bottom side ends in a cone-shaped part (14; 131; 141).

5. The tank according to claim 4, characterized in that a further cylindrical portion (15) is fitted to the bottom of the cone-shaped bottom part (14), said further cylindrical portion (15) being delimited in its bottom area by plane sloping walls (17), and closing between them a discharge screw (18).

6. The tank according to claim 4, characterized in that a further cylindrical portion (15) is fitted to the bottom of the cone-shaped bottom part (14), said further cylindrical portion (15) being delimited in its bottom area by plane sloping wall faces (17), one of said faces (17a) ending directly and another one of said faces (17b) ending via a band in a pipe (91) provided in oblique arrangement relative to said vertical axis.

7. The tank according to claim 4, characterized in that the bottom area of said cone-shaped part (131) ends in a pipe (132) attached in oblique arrangement.

8. The tank according to claim 4, characterized in that the bottom area of the cone-shaped bottom part (141) ends in a centrally fitted pipe (142).

9. The tank according to any of claims 1 through 3, characterized in that said cylindrical portion (151) is delimited at its bottom by a sloping plane bottom face (152).

10. The tank according to any of claims 1 through 3, characterized in that said cylindrical portion (161) at its bottom is delimited by an inclined, curved bottom face (173).

11. The tank according to claim 10, characterized in that said bottom face (163) takes the form of a cylindrical shell whose cylinder axis (164) intersects the center of said agitator.

12. The tank according to any of claims 9 through 11, characterized in that a juice cavity (156) is arranged below said bottom face (152, 163) and is, further, connected with the interior of the tank (150) via a drain valve (155).

13. The tank according to any of claims 1 through 12, characterized in that said agitator elements are provided with obstacles (103; 113, 114; 126) taking either the shape of projections, arranged in parallel to the shaft (101; 111; 121; 124) or of marginal projections (102, 102a).

14. The tank according to any of claims 1 through 13, characterized in that said agitator elements are provided with heat exchange elements (87).

15. The tank according to any of claims 1 through 14, characterized in that several agitators are arranged above each other in one tank (30; 40; 50; 80; 90).

16. The tank according to claim 15, characterized in that the uppermost agitator is directly rotated by a drive (47) and that the lower agitators are driven either by an auxiliary power take-off shaft (48) of the drive (47) via shiftable clutches (49), or through separate shiftable drives.

17. The tank according to claim 15 or 16, characterized in that said agitators are adjustable in height.

## Revendications

1. Récipient vertical pour le traitement de liquides alimentaires contenant des solides, notamment du moût de vin rouge, comprenant une partie pour l'essentiel cylindrique (11; 151;

161) avec un axe vertical (24), et un agitateur aménagé à l'intérieur du récipient (10; 30; 40; 50; 80; 90; 130; 140; 150; 160), propre à tourner autour d'un ou plusieurs axes au moins approximativement horizontales (20; 31; 33; 31a; 33a; 41, 43, 45; 51, 53, 55; 81, 83) à l'intérieur du recipient (10; 30; 40; 50; 80; 90; 130; 140; 150; 160) et balayant un secteur du volume à profil sphérique avec ses éléments agitateurs, caractérisé en ce que les éléments agitateurs sont conçus sous forme de disques mélangeurs pour l'essentiel circulaires ou semi-circulaires (21; 32, 34; 42, 44, 46; 52, 54, 56; 82, 84; 100; 110; 120; 123; 133; 143; 153; 162), qui saisissent tout le volume de la section et qui sont étanches aux composants solides.

2. Récipient d'après la revendication 1, caractérisé en ce que le disque mélangeur (100) est conçu sous forme d'un corps creux plat, de préférence à partir de tôles (105).

3. Récipient d'après la revendication 1 ou 2, caractérisé en ce que le disque mélangeur (110; 120; 123) est pourvu de plaques-filtres (112; 122; 125) de préférence amovibles.

4. Récipient d'après l'une des revendications 1 à 3, caractérisé en ce que le côté supérieur de la partie cylindrique (11) est fermé par un dôme vouté (12), le côté inférieur par une partie conique (14; 131; 141).

5. Récipient d'après la revendication 4, caractérisé en ce que le côté inférieur de la partie conique (14) est prolongée par un segment cylindrique (15), délimité au niveau inférieur par des surfaces obliques planes (17), entre lesquelles est aménagée une vis sans fin d'évacuation (18).

6. Récipient d'après la revendication 4, caractérisé en ce que le côté inférieur de la partie conique (14) est prolongée par un segment cylindrique (15), délimité au niveau inférieur par des surfaces planes (17), dont l'une (17a) se termine directement, l'autre (17b) avec inflexion, par une tubulure (91) disposée obliquement par rapport à l'axe vertical (24).

7. Récipient d'après la revendication 4, caractérisé en ce que le côté inférieur de la partie conique (131) est prolongé par une tubulure (132) disposée obliquement.

8. Récipient d'après la revendication 4, caractérisé en ce que le côté inférieur de la partie conique (141) est prolongé par une tubulure centrale (142).

9. Récipient d'après l'une des revendications 1 à 3, caractérisé en ce que le côté inférieur de la partie cylindrique (151) est délimité par un fond oblique plat (152).

10. Récipient d'après l'une des revendications 1 à 3, caractérisé en ce que le côté inférieur de la partie cylindrique (161) est délimité par un fond oblique vouté (173).

11. Récipient d'après la revendication 10, caractérisé en ce que le fond (163) a la forme d'une enveloppe de cylindre l'axe du cylindre (164) passant par le centre de l'agitateur.

12. Récipient d'après l'une des revendications 9 à 11, caractérisé en ce qu'une chambre pour le jus (156) reliée avec l'intérieur du récipient (150) par l'intermédiaire d'une soupape d'évacuation (155) est aménagée au-dessous du fond (152, 163).

13. Récipient d'après l'une des revendications 1 à 12, caractérisé en ce que les éléments agitateurs sont munis d'obstacles (103; 113; 114; 126) sous forme d'élévations parallèles à l'axe (101; 111; 121; 124) ou bien de bords rehaussés (102, 102a).

14. Récipient d'après l'une des revendications 1 à 13, caractérisé en ce que les éléments agitateurs sont pourvus d'elements échangeurs de chaleur (87).

15. Récipient d'après l'une des revendications 1 à 14, caractérisé en ce qu'un récipient (30; 40; 50; 80; 90) comporte plusieurs agitateurs disposés l'un sur l'autre.

16. Récipient d'après la revendication 15, caractérisé en ce que l'agitateur placé à l'extrémité supérieure est actionné directement par un mécanisme d'entraînement (47) et en ce que les agitateurs inférieurs sont entraînés soit par l'intermédiaire de dispositifs d'accouplement embrayables (49) d'une prise secondaire (48) du mécanisme d'entraînement (47), soit par d'autres mécanismes d'entraînement embrayables.

17. Récipient d'après la revendication 15 ou 16, caractérisé en ce que les agitateurs sont réglables en hauteur.

Fig. 1

Fig. 2 a

Fig. 2 b

Fig. 3 a

Fig. 3 b

Fig. 4

Fig. 5

Fig. 6

Fig. 7

Fig. 8

Fig. 9a

Fig. 9 b

Fig. 10    Fig. 11    Fig. 12

Fig. 13    Fig. 14

Fig.15

130
133
131
132

Fig.16

140
143
141
142

XVIII

Fig 17

150
153
151
152
156
154
155

Fig. 18 a

160
162
164
161
163
165
166
167

XVIII

Fig. 18 b

160
162
161
163
165